# EUROPEAN PATENT SPECIFICATION

(11) **EP 2 860 433 B1**
(45) Date of publication and mention of the grant of the patent: **12.12.2018**
(21) Application number: 13404004.7
(22) Date of filing: 14.10.2013
(51) Int. Cl.: F16L 19/028, B60T 17/04

(54) **Flared pipe connection arrangement**
Rohrverbindungsvorrichtung mit einem aufgeweitetem Rohr
Dispositif pour raccords de tuyauterie équipé d'un tuyau évasé

(43) Date of publication of application: 15.04.2015
(73) Proprietor: Bant Boru Sanayi Ve Ticaret Anonim Sirketi, 41480, Gebze - Kocaeli (TR)
(72) Inventor: Tosun, Orhan, Kocaeli (TR); Koyuncu, Ozan, Kocaeli (TR)

(56) References cited:
- WO-A1-02/090816
- DE-U1-202012 104 347
- US-A- 6 109 660
- US-A- 6 130 404
- US-A1- 2009 324 363

## Description

### TECHNICAL FIELD

Present invention relates to a connection arrangement comprising a flared pipe connected to a connector via a connection means.

### BACKGROUND OF THE INVENTION

Flared pipes/tubes are usually used in cases where a relatively precise connection is needed between a pipe and a connector. For instance, it is required to make such connection securely in cases where high-pressure fluid transfer from the pipe to the connector part is needed. Otherwise, there may arise a leak in the pipe to connector connection, and it will not be possible to transfer the liquid to the connector at desired pressure.

The connector comprises a conical housing for the flared pipe connection, and after the conical surface of the flared head is seated on the conical housing in the connector, it is secured via a connecting means. The connecting means is generally a threaded sleeve, and the connection is fixed by the engagement of the threads of the sleeve with threads formed on the connector.

There are two main aspects taken into consideration in flared pipe connections: The axial force applied to the flared head by the connecting means is required to be within a certain range, and the torsion stress occurring on the flared pipe by the connecting means should not exceed a certain limit. If the axial force applied by the connecting means on the flared head exceeds a certain limit, the flared head undertakes more plastic deformation than necessary and the coupling balance between the tapering of the flared head and the housing in the connector fails. In case the axial force is lower than a certain amount, the necessary plastic deformation on the flared head will not form and coupling balance between the flared pipe and the connector will not occur. In such a case, the flared head cannot be positioned precisely in the slot of the connector, and leakage may take place. On the other hand, if the connecting means is tightened too much, torsion stress on pipe increases and this may cause the connection to loose in time as tension stress forms stored torque in direction of loosening the connection. Furthermore, the loosening risk of the connection due to vibration in time may increase depending on an arrangement where pipe-to-connector connection will be used.

A solution to the above-mentioned problems can be offered by providing different frictions basically at different parts of the connection. For example, such a proposal is made in US 8,172,278 to this problem by applying a coating on the surfaces where connecting means is contacting the connector and flared head, and on the threaded surface. According to US 8,172,278, the coefficient of friction applied to threads of the connecting means is larger than the coefficient of friction of the coating on the other coated surfaces. The proposal in US 8,172,278 is disadvantageous and costly, since it requires applying two different coating on different parts of the connecting means.

### BRIEF DESCRIPTION OF THE INVENTION

The object of the present invention is to provide an effective flared pipe connection arrangement.

According to the above object, the invention relates to a pipe connection arrangement comprising a pipe comprising a flare at at least at one end of the pipe, the flare extending outwardly from the pipe wall and having an at least partially coated upper surface close to the pipe wall and a lower conical surface below the upper surface;
a connector comprising a conical housing having a form for supporting the lower conical surface;
a threaded connecting means forcing the upper surface of the flare for connecting the pipe to the connector and the threaded connecting means having threads engaging to threads threaded formed on the connector.

According to a preferred embodiment of the invention, the threads of the threaded connecting means are at least partially coated with a coating material. According to the preferred embodiment of the invention, the coefficient of friction of the material, with which are the threads coated, is higher than the coefficient of friction the material, with which the upper surface of the flare is coated.

According to one embodiment of the invention, both the threads of the threaded connecting means and the surface of the threaded connecting means forcing the upper surface of the flare are coated with a coating material.

According to a preferred embodiment of the invention, the external surface of the pipe remaining slightly above the flare is coated at least partially with the coating material in addition to the upper surface of the flare.

According to the preferred embodiment of the invention, the coefficient of friction of the coating material is lower than coefficient of friction of the lower conical surface.

### BRIEF DESCRIPTION OF THE FIGURES

In order to better understand the configuration of the present invention and its advantages with additional elements, it is necessary to evaluate it along with the figures that are described below.
Figure 1 is the side of view of the flared pipe of the connection arrangement according to the invention.

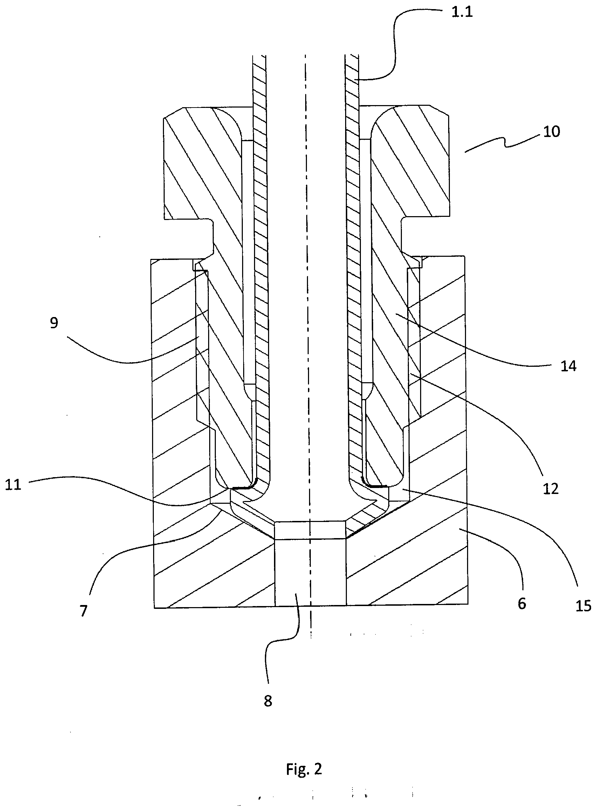

Figure 2 is the sectional side of view of the pipe connection arrangement according to the invention.
Figure 3 is another sectional side of view of the pipe connection arrangement according to the invention.

### DETAILED DESCRIPTION OF THE INVENTION

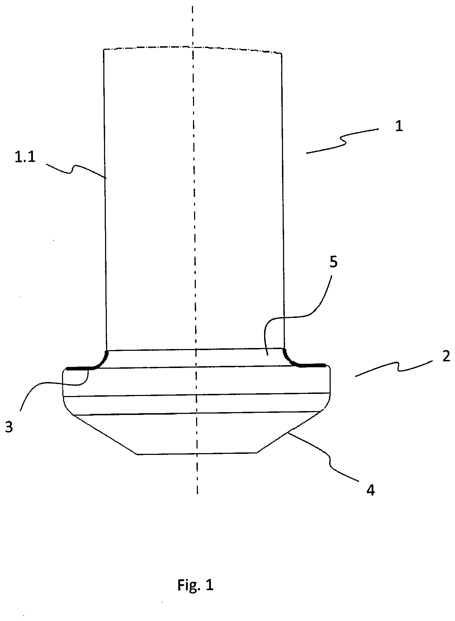

As it is seen in Figure 1, the flared pipe (1) according to the invention comprises a flare (2) extending outwardly from the pipe wall (1.1) on at least one end of the pipe (1). The flare (2) has preferably a circular form and comprises an upper surface (3) close to the pipe wall (1.1) and a lower conical surface (4) formed below the upper surface (3). The flare (2) is preferably monolithic with the pipe (1) and formed on the far end of the pipe (1) by undergoing plastic deformation.

The flare (2) can have various forms. For example, the upper surface (4) can have an angle 22.5° to 135° with the pipe axis. Therefore, a connection element can find a sufficient space to be located onto the flare upper surface (3). For example, in Figure 1, the angle between the upper surface (3) and the pipe axis is 90°.

The lower conical surface (4) is also formed so that it can have a various tapering angles. According to the preferred embodiment of the invention, tapering angle of the flare lower surface (3) may vary from 22.5° to 135°, and it has a tapering angle of 115° in male flares, and 90° or 120° in female flares. These angles are amounted with reference to the axial line of the pipe.

Flare upper surface (3) is at least partially coated with a coating material. After coating is applied, the coefficient of friction of the flare upper surface (3) preferably has a value between 0.03 - 0.08. The coefficient of friction of the flare lower surface (4) is higher than that of the upper surface in any case, and is 2 to 5 times more than the latter.

According to the preferred embodiment of the invention, the thickness of coating is between 5µ-20µ, more preferably between 7µ-15µ. Molybdenum disulfide (MoS₂) is used as the coating material, and optionally, molybdenum disulfide polytetrafluoroethylene (PTFE) can be admixed.

The coating can be applied on the flare upper surface (3) in several ways, such as spraying or dipping as known in the art. Yet, necessary precautions are taken for avoiding the coating of the flare lower surface (4) while coating is made; for example, the coating can be made by covering the lower conical surface (4) via a mask. The lower conical surface (4) should not be coated since it will be positioned precisely in a conical housing to be seated on the connector where the pipe connection is to be applied.

According to one embodiment of the invention, area where coating is to be applied can also include the external surface (5) of the pipe wall slightly above the flare (2). Therefore, the coating is applied both onto the flare upper surface and the external surface slightly above the upper surface, which would be advantageous. Likewise, as a connection element (for example a sleeve) applies force in axial direction on the flare upper surface for the attachment of the pipe to a connector provides a better friction, the coating on the pipe wall just above the flare may provide that this friction happens at a greater extent. Likewise, the coating layer on the pipe wall may contact to the cylindrical inner surface of the connecting means.

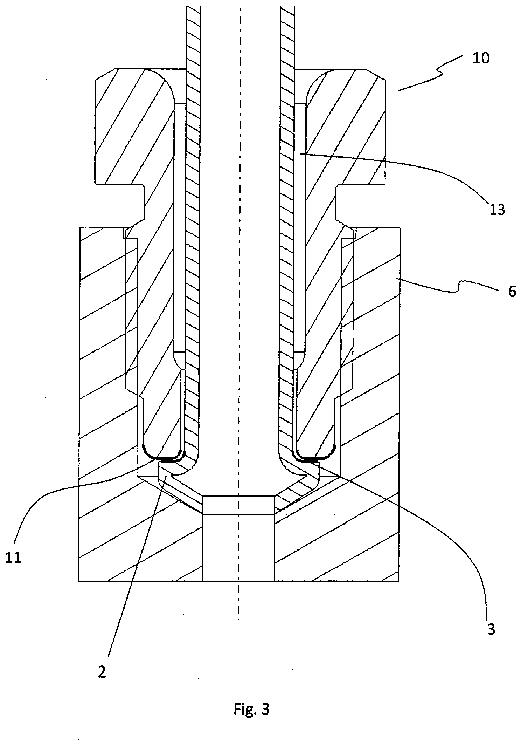

The invention relates to a pipe connection arrangement. Example of such an arrangement is shown in figure 3, and the arrangement comprises a flared pipe (1) with the flare upper surface (3) coated. In addition, it comprises a connector (6), which the pipe (1) can be connected to, and a connecting means (10) for the fixation of the pipe-to-connector connection. Such a pipe connection arrangement may be suitable for the transfer of a pressurized liquid passing through the pipe (1) into an opening (8) formed on the connector. Such an arrangement can be used for example in motor vehicles (for example in hydraulic brake system of motor vehicles).

The pipe (1) is connected to the connector (6) on the end where the flare (2) is formed. The connector (6) comprises a conical housing (7), and the flare lower surface (4) of the pipe in conical form is seated on the connector conical housing (7). Thereafter, the pipe (1) that is provided through a bore (13) formed along a connecting means (10) is fixed to the connector (6) by screwing the connecting means (10), such as a sleeve, having threads formed at its cylindrical body surface. In order to achieve a connection, the tip (11) of the connecting means applies pushing force on the upper side of the flare upper surface (3). The threads (12) formed on the body (14) of the connecting means (10) are formed the way that they engage to threads (9) formed on the inner walls of an opening (15) formed along the connector (6).

The connecting means (10) is preferably completely coated by an anti-corrosion material comprising zinc-nickel. Forcing the flare upper surface (3) is the circular end (11) of the connecting means (10) and the tip (11) of the connecting means can be coated with a coating material via a known coating method (by dipping or spraying etc.). The coefficient of friction of the material used in coating the tip (11) of the connecting means is lower than the coefficient of friction of the material used in coating all the surfaces of the connecting means (10). According to the preferred embodiment of the invention, the tip (11) of the connecting means (10) has a coefficient of friction of 0.03 to 0.07 after being coated. As the coating material, molybdenum disulfide (MoS2) is used, and optionally, molybdenum disulfide polytetrafluoroethylene (PTFE) can be admixed thereto. According to the preferred embodiment of the invention, the coating thickness of the tip (11) of the connecting means is 5µ to 20µ.

The connecting means threads (12) may be preferably coated (dipping, spraying etc.) with a coating having a higher coefficient of friction. When threads (12) are coated, the coefficient of friction of threads is higher than the coefficient of friction of the other surfaces of the connecting means (10), the whole of which is coated with another anticorrosive material (for example zinc-nickel admixture). Furthermore, the coefficient of friction of threads is higher than the coefficient of friction of the coated flare upper surface (3). Similarly, in cases where the tip (11) of the connecting means (11) is coated in addition to the threads (12), the coefficient of friction of the threads is higher than that of the coated tip (11) of the connecting means. According to the preferred embodiment of the invention, the threads of the connecting means (12) have a coating thickness of 15µ to 20µ after being coated.

## Claims

1. A pipe connection arrangement comprising,
a pipe (1) having a flare (2) arranged at at least one end of the pipe (1), the flare (2) extending outwardly from the pipe wall (1.1) and having an upper surface (3) close to the pipe wall (1.1) and a lower conical surface (4) below the upper surface (3);
a connector (6) comprising a conical housing (7) for supporting the lower conical surface (4), an opening (15) for receiving a threaded connecting means (10) having threads (12), and an inner wall, defined by the opening (15), having threads (9) cooperating with the threads (12) of the threaded connecting means (10);
the threaded connecting means (10) having a tip (11) contacting the upper surface of the flare (3) for connecting the pipe (1) to the connector (6) **characterized in that** the upper surface (3) of the flare (2) is at least partially coated with a friction reducing coating material.

2. Pipe connection arrangement of claim 1, wherein the entire connecting means (10) is coated with a first coating material, and the tip (11) of the connecting means is coated with a second coating material.

3. Pipe connection arrangement of claim 2, wherein the coefficient of friction of said second coating is lower than that of the first coating, and the thickness of the second coating is between 5µ-20µ.

4. Pipe connection arrangement of claim 1, wherein the entire connecting means (10) is coated with a first coating material, and the threads (9) of the connecting means is coated with a second coating material.

5. Pipe connection arrangement of claim 4, wherein the coefficient of friction of said second coating is higher than that of the first coating, and the thickness of the second coating is between 15µ-20µ.

6. Pipe connection arrangement of claim 4, wherein the coefficient of friction of said second coating is higher than that of the flare upper surface (3), and the thickness of said second coating is between 15µ-20µ.

7. Pipe connection arrangement of claim 2, wherein the threads (9) of the connection means are coated with a third coating material.

8. Pipe connection arrangement of claim 7, wherein the coefficient of friction of said third coating is higher than that of the second coating and the coating on flare upper surface (3), and the thickness of said third coating is between 15µ-20µ.

9. Pipe connection arrangement of claim 1, wherein the angle between the upper surface (3) and the pipe axis is 90°.

## Patentansprüche

1. Rohrverbindungsanordnung, umfassend:
ein Rohr (1) mit einem ersten Bördel (2), der an mindestens einem Ende des Rohrs (1) angeordnet ist, wobei sich der Bördel (2) von der Rohrwand (1.1) auswärts erstreckt und eine obere Oberfläche (3) nahe an der Rohrwand (1.1) und eine untere konische Oberfläche (4) unterhalb der oberen Oberfläche (3) aufweist;
einen Verbinder (6) mit einem konischen Gehäuse (7) zum Stützen der unteren konischen Oberfläche (4), einer Öffnung (15) zum Aufnehmen einer verschraubbaren Verbindungseinrichtung (10) mit einem Gewinde (12) und einer Innenwand, die von der Öffnung (15) definiert wird und die ein Gewinde (9) aufweist, das mit dem Gewinde (12) der verschraubbaren Verbindungseinrichtung (10) zusammenwirkt;
wobei die Verbindungseinrichtung (10) ein vorderes Ende (11) aufweist, das mit der oberen Oberfläche des Bördels (3) in Berührung kommt, um das Rohr (1) mit dem Verbinder (6) zu verbinden, **dadurch gekennzeichnet, dass** die obere Oberfläche (3) des Bördels (2) zumindest zum Teil mit einem reibungsvermindernden Beschichtungsmaterial beschichtet ist.

2. Rohrverbindungsanordnung nach Anspruch 1, wobei die gesamte Verbindungseinrichtung (10) mit einem ersten Beschichtungsmaterial beschichtet ist und das vordere Ende (11) der Verbindungseinrichtung mit einem zweiten Beschichtungsmaterial beschichtet ist.

3. Rohrverbindungsanordnung nach Anspruch 2, wobei der Reibungskoeffizient der zweiten Beschichtung niedriger ist als derjenige der ersten Beschichtung und die Dicke der zweiten Beschichtung zwischen 5 µ und 20 µ beträgt.

4. Rohrverbindungsanordnung nach Anspruch 1, wobei die gesamte Verbindungseinrichtung (10) mit einem ersten Beschichtungsmaterial beschichtet ist und das Gewinde (9) der Verbindungseinrichtung mit einem zweiten Beschichtungsmaterial beschichtet ist.

5. Rohrverbindungsanordnung nach Anspruch 4, wobei der Reibungskoeffizient der zweiten Beschichtung höher ist als derjenige der ersten Beschichtung und die Dicke der zweiten Beschichtung zwischen 15 µ und 20 µ beträgt.

6. Rohrverbindungsanordnung nach Anspruch 4, wobei der Reibungskoeffizient der zweiten Beschichtung höher ist als derjenige der oberen Oberfläche (3) des Bördels und die Dicke der zweiten Beschichtung zwischen 15 µ und 20 µ beträgt.

7. Rohrverbindungsanordnung nach Anspruch 2, wobei das Gewinde (9) der Verbindungseinrichtung mit einem dritten Beschichtungsmaterial beschichtet ist.

8. Rohrverbindungsanordnung nach Anspruch 7, wobei der Reibungskoeffizient der dritten Beschichtung höher ist als derjenige der zweiten Beschichtung und der Beschichtung auf der oberen Oberfläche (3) des Bördels und die Dicke der dritten Beschichtung zwischen 15 µ und 20 µ beträgt.

9. Rohrverbindungsanordnung nach Anspruch 1, wobei der Winkel zwischen der oberen Oberfläche (3) und der Rohrachse 90° beträgt.

## Revendications

1. Dispositif de raccordement de tuyauterie, comprenant un tuyau (1) ayant un évasement (2) à au moins une extrémité du tuyau (1), l'évasement (2) s'étendant vers l'extérieur à partir de la paroi (1.1) du tuyau et ayant une surface (3) supérieure à proximité de la paroi (1.1) du tuyau et une surface (14) conique inférieure en dessous de la surface (3) supérieure; un connecteur (6), comprenant un boîtier (7) conique, pour supporter la surface (4) conique inférieure, une ouverture (15) pour recevoir un moyen (10) fileté de raccordement, ayant des filets (12), et une paroi intérieure définie par l'ouverture (15), ayant des filets (9) coopérant avec les filets (12) du moyen (10) fileté de raccordement, le moyen (10) fileté de raccordement ayant un bout (11) en contact avec la surface supérieure de l'évasement (3) pour raccorder le tuyau (1) au connecteur (6), **caractérisé en ce que** la surface (3) supérieure de l'évasement (2) est revêtue, au moins en partie, d'un matériau de revêtement réduisant le frottement.

2. Dispositif de raccordement de tuyauterie suivant la revendication 1, dans lequel tout le moyen (10) de raccordement est revêtu d'un premier matériau de revêtement et le bout (11) du moyen de raccordement est revêtu d'un deuxième matériau de revêtement.

3. Dispositif de raccordement de tuyauterie suivant la revendication 2, dans lequel le coefficient de frottement du deuxième revêtement est plus petit que celui du premier revêtement et l'épaisseur du deuxième revêtement est comprise entre 5µ et 20µ.

4. Dispositif de raccordement de tuyauterie suivant la revendication 1, dans lequel tout le moyen (10) de raccordement est revêtu d'un premier matériau de revêtement et les filets (9) du moyen de raccordement sont revêtus d'un deuxième matériau de revêtement.

5. Dispositif de raccordement de tuyauterie suivant la revendication 4, dans lequel le coefficient de frottement du deuxième revêtement est plus grand que celui du premier revêtement et l'épaisseur du deuxième revêtement est comprise entre 15µ et 20µ.

6. Dispositif de raccordement de tuyauterie suivant la revendication 4, dans lequel le coefficient de frottement du deuxième revêtement est plus grand que celui de la surface (3) supérieure de l'évasement et l'épaisseur du deuxième revêtement est comprise entre 15µ et 20µ.

7. Dispositif de raccordement de tuyauterie suivant la revendication 2, dans lequel les filets (9) du moyen de raccordement sont revêtus d'un troisième matériau de revêtement.

8. Dispositif de raccordement de tuyauterie suivant la revendication 7, dans lequel le coefficient de frottement du troisième revêtement et du revêtement sur la surface (3) supérieure de l'évasement et l'épaisseur du troisième revêtement est comprise entre 15µ et 20µ.

9. Dispositif de raccordement de tuyauterie suivant la revendication 1, dans lequel l'angle entre la surface (3) supérieure et l'axe du tuyau est de 90°.
